Europäisches Patentamt

European Patent Office

Office européen des brevets

(19)

(11) Publication number: **0 222 339 B1**

(12) **EUROPEAN PATENT SPECIFICATION**

(45) Date of publication of the patent specification:
25.04.90

(21) Application number: 86115450.8

(22) Date of filing: 07.11.86

(51) Int. Cl.⁴: **C04B 28/02**
// (C04B28/02, 14:06, 14:14,
14:42, 14:48, 16:06, 20:00)

(54) Glass fiber-reinforced cement press molded body and process for the production thereof.

(30) Priority: 08.11.85 JP 250154/85

(43) Date of publication of application:
20.05.87 Bulletin 87/21

(45) Publication of the grant of the patent:
25.04.90 Bulletin 90/17

(84) Designated Contracting States:
BE DE FR GB

(56) References cited:
CHEMICAL ABSTRACTS, vol. 90, no. 16, 16th April 1979,
page 303, column 1, abstract no. 126459h, Columbus,
Ohio, US; & JP - A - 53 145 835 (KANEBO
LTD.) 19-12-1978
CHEMICAL ABSTRACTS, vol. 95, no. 16, 19th
October 1981, page 288, column 2, abstract
no. 137309p, Columbus, Ohio, US; & JP - A
- 81 45860 (MATSUSHITA ELECTRIC WORKS,
LTD.) 25-04-1981
CHEMICAL ABSTRACTS, vol. 86, no. 18, 2nd May 1977,
page 303, columns 1, 2, abstract no. 126129t, Columbus,
Ohio, US; & JP - A - 77 04532 (IBIGAWA ELECTRIC
INDUSTRY CO., LTD.) 13-01-1977
CHEMICAL ABSTRACTS, vol. 95, no. 2, 13th July 1981,
page 282, column 2, abstract no. 11605p, Columbus,
Ohio, US; & JP - A - 81 17967 (ASAHI CHEMICAL

(73) Proprietor: NITTO BOSEKI CO., LTD., 1 Aza Higashi
Gonome, Fukushima-shi Fukushima-ken(JP)

(72) Inventor: Ogura, Yasuo, 12-12, Katsutadai-4-chome,
Yachiyo-shi(JP)

(74) Representative: Hansen, Bernd, Dr.rer.nat. et al,
Hoffmann, Eitle & Partner Patentanwälte
Arabellastrasse 4 Postfach 81 04 20,
D-8000 München 81(DE)

(56) References cited: (continuation)
INDUSTRY CO., LTD.) 20-02-1981
CHEMICAL ABSTRACTS, vol. 98, no. 22, 30th May 1983,
page 312, column 1, abstract no. 184622g, Columbus,
Ohio, US; & JP - A - 57 191 262 (ASAHI CHEMICAL
INDUSTRY CO., LTD.) 25-11-1982

## Description

This invention relates to glass fiber-reinforced cement press molded products such as rooftop heat-insulating panels, flooring, wall blocks and the like which are relatively small in size.

Description of the Prior Art

Hitherto, the press molded products of glass fiber-reinforced cement have been produced by mixing cement, aggregates such as siliceous sand, glass fiber and water, and press molding the mixture (see, for instance, Japanese Patent Laid-Open No. 86422/77 and Japanese Patent Publication No. 25562/78).

Conventional cement mortar was high in density because of use of siliceous sand or the like as aggregates, so that the press molded cement products were also high in density and heavy in weight. Therefore, in case of using such molded cement products for wall or ceiling, the backing or ground thereof must be strong enough to sustain the weight of such molded products. Also, these molded cement products were not easy to handle because of their heavy weight. Further, the conventional press molded cement products had the problems of possible damage to the reinforcing fibers by aggregate materials such as siliceous sand in the course of mixing operation and reduction of strength of the molding to due to damage of the reinforcing fibers by said aggregates in the pressing operation. Moreover, when mixing mortar by using said conventional aggregates, many fine voids would be formed in the produced mortar due to rough particle size distribution, so that even if the mortar was molded as solid as possible, no satisfactorily close contact between reinforcing fiber and mortar could be attained, resulting in so much reduction of strength of the molded product.

Chemical Abstracts, vol. 90, 126459h; vol. 95, 137309p; vol. 86, 126129t; vol. 95, 11605p; and vol. 98, 184622g disclose various cement mortars which incorporate shirasu balloons and glass fibers as a reinforcing component. The products of this reference are molded by means such as extrusion, casting or paper-making methods.

This invention has been achieved as a result of streneous studies by the present inventors for solving said problems, and it has made it possible to obtain a glass fiber-reinforced cement press molded procuct which is light in weight and high in strength by mixing "shirasu" balloons as aggregates and, if necessary, further adding thereto ultra-fine particulate activated silica.

In accordance with this invention, there is provided a glass fiber-reinforced cement press molded body containing "shirasu" balloons in an amount of 5 to 45% by weight and ultra-fine particulate activated silica in an amount of 5 to 40% by weight, both based on the weight of the cement, and also containing glass fibers in an amount of 1 to 7% by volume based on the volume of the molded body. The "shirasu" is an amorphous fine sand-like volcanic ash material.

In the mortar preparation according to this invention, because of use of hollow spherical light-weight and pressure-resistant aggegates such as "shirasu" balloons, which, in the course of mortar preparation, serve as a cushioning against pressure applied in the pressing step, owing to their spherical form and pressure resistance, there is no fear that the glass fibers be damaged by the aggregates, and thus the fibers are allowed to exhibit its reinforcing effect to the maximum degree. Also, said aggregates of this invention contributes to the weight reduction of the molding and makes it possible to obtain a press molded body which is light in weight and high in strength.

The "shirasu balloons" referred to in the present specification, also known as "shirasu glass micro balloons", are fine vitreous hollow bodies that can be obtained by heat treating the fine particles of glass contained in "shirasu" at a temperature of around 1,000°C for a short period of time. The "shirasu balloons" normally have an appearance of white or light brown powder, and a composition of alumino-silicate having a typical chemical analysis of 75–76% $SiO_2$, 13–14% $Al_2O_3$, 1.3–1.4% $Fe_2O_3$, 0.05–0.12% $TiO_2$, 0.04–0.06% $MnO$, 0.7–0.9% $CaO$, 0.12–0.20% $MgO$, 3.5–3.7% $Na_2C$ and 3.5–3.9% $K_2O$, and ignition loss of 1–1.6%, but it is not limited to such composition alone. The "shirasu" or "shirasu balloons" both are vitreous or glassy.

The "shirasu balloons" were developed by Agency of Industrial Science and Technology, Government Industrial Research Institute, Kyushu, in 1970. The "shirasu balloons" are commercially available, i.e. made and sold by Taiheiyo Kensetsu Kabushiki Kaisha, Sanki Kogyo Kabushiki Kaisha, etc., Japan. Shirasu balloons made and sold under the trade mark of "SANKILITE" by Sanki Koygy KK may be used in the present application. The "ultra-fine particulate activated silica" which is used in this invention is the amorphous ultra-fine activated silica particles obtained by collecting and properly treating the waste gas produced in the course of production of ferrosilicon or metallic silicon in an electric furnace.

By the addition of said ultra-fine particulate activated silica (hereinafter referred to as fumed silica), the voids in the mortar, which could not be filled up when using cement and aggregates alone, can be completely filled up to enhance the reinforcing effect of fibers. Such fumed silica is also reacted with the alkaline component of cement (pozzolan reaction) to serve as an alkalinity-reducing agent for elevating the durability of the alkali-resistant glass fibers.

Further, the fluidity of the premixed mortar is improved by the spherical form of "shirasu" balloons and ultra-small particle diameter of fumed silica, allowing the mortar to reach every corner of the mold

cavity. Moreover, since a moderate degree of viscosity is afforded to the mortar, it becomes possible to prevent separation of materials at the time of pressing for dehydration.

The alkali-resistant glass fibers to be mixed in cement mortar in this invention may be any of those generally used in the art. Typically, it can be short fibers or chopped strands having a fiber length in the range of preferably 3 to 50 mm, more preferably 6 to 25 mm.

The amount of glass fibers contained in the mortar may be in the range commonly used in the art, but preferably it is in the range of 1 to 7% by volume, more preferably 2 to 5% by volume, based on the volume of the molded body. If the content of glass fibers is less than 1% by volume, no satisfactory reinforcing effect of the fibers is provided, while if said content exceeds 7% by volume, the fiber dispersion in the mortar may become non-uniform to make it impossible to obtain a homogeneous molded body.

The recommended content of shirasu balloons in the mortar is in the range of 5 to 45% by weight. If the content of shirasu balloons is less than 5% by weight, the desired weight reduction of the molding can not be achieved and also the effect of balloons for mitigating the damage to fibers proves unsatisfactory. If the balloon content exceeds 45% by weight, although the weight reduction of the molding is quite satisfactory, the bending strength of the molded body lowers to such an extent that it can hardly serve for practical use.

In this invention, fumed silica is added to the mortar in which its content is in the range of 5 to 40% by weight. If its content is less that 5% by weight, it can not produce its effect as an alkalinity-reducing agent for cement to a satisfactory degree. If its content exceeds 40% by weight, although its effect as an alkalinity-reducing agent is excellent, it reduces the bending strength of the molding so much as to make the molding unserviceable for practical use.

The cement used for forming the glass fiber-reinforced cement molded body according to this invention may be, for instance, Portland cement, GRC cement, moderate heat cement, blast furnace cement, fly-ash cement, alumina cement, silica cement, thermosetting cement and the like.

In this invention, it is possible to use a sheeting (netting) which has been commonly employed in the art. Use of such sheeting improves the bending strength of the molded product and reduces its deflection. For the sheeting material used in this invention, glass fibers, synthetic fibers (polyvinyl alcohol fibers, polyethylene fibers, polypropylene fibers, acrylonitrile fibers, polyamide fibers, polyethylene terephthalate fibers, etc.), and metals (stainless steel, iron, etc.) in a form such as fibrous form are suited. The mesh size of the sheeting is preferably in the range of 5 to 40 mm, more preferably 15 to 25 mm.

The "shirasu" balloons blended in this invention play the role of a cushioning between the aggregates such as siliceous sand and the reinforcing fibers as such balloons are close to sphere in configuration, smooth in surface and hollow. Especially, they exhibit a remarkable pressure resistance in the state of being pressed at the time of press molding as they are nearly spherical in configuration, thus serving to minimize the degree of break while preventing damage to the reinforcing fibers. A material having fine open-cells such as perlite is used as light-weight aggregates in paper making, but when such material is used for press molding of glass fiber-reinforced cement, the resulting molded product proves to be high in density since said aggregate material is smashed down under pressure in the press molding operation and the cement would be forced into and fill up the fine open-cells because of the broken spherical configuration of said material and poor pressure resistance of its particles. On the other hand, in case of using "shirasu" balloons, because of their nearly spherical hollow structure and excellent pressure resistance, it is unnecessary to use a large amount of water at the time of mixing and also there is no possibility of the cement being forced into the hollow portions, thus allowing obtainment of a high-strength light-weight molded product by press molding. When fumed silica is added to said "shirasu" balloons, there are produced such additional effects as fixing of free calcium hydroxide, further strengthening of mortar, enhancement of water tightness, reduction of cracking, etc., and further, owing to the synergistic effect of both the aggregate materials, it becomes possible to obtain a glass fiber-reinforced cement press molded body which is light in weight and high in strength, that is, high in specific strength.

Examples 1, 3, 4 and Comparative Examples 2–6

Portland cement, siliceous sand #5, #6 and #7, "shirasu" balloons (bulk specific gravity: 0.42; particle size: not greater than 100 $\mu$), fumed silica (average particle size: 0.15 $\mu$; silica content: 90%) and water were charged into an omnimixer in the ratios shown in Table 1, and mixed therein for one minute. Then to the mixture was further added 3% by volume of alkali-resistant glass fibers (fiber length: 13 mm, made by Nitto Boseki KK.) and mixed for 15 seconds. The thus obtained mixture was supplied into a 50 cm square plate molding device and molded under a maximum pressure of 50 kg/cm² to form a 500 mm × 500 mm × 15 mm thick glass fiber-reinforced cement plate.

Example 2 and Comparative Example 1

The same mixture as used in the previous examples was supplied uniformly into a hydraulic press molding device for 50 cm square plate molding so that the molding thickness would become approximately 10 mm and lightly prepressed under a pressure of 1 MPa, (10 kg/cm²). After removing pressure, a glass fiber sheeting (mesh size: 2 cm; METSUKE (weight per unit area): 100 g/cm²) was placed in the molding device and the mixture was further supplied into the molding device so that the total molding thickness would become 15 mm and molded under a maximum pressure of 50 kg/cm² to obtain a 500 mm × 500 mm × 15 mm thick glass fiber-reinforced cement plate.

Then the moldings obtained by the methods of Examples 1–4 and Comparative Examples 1–6 described above were cured in a moist state at room temperature for 4 weeks and their specific gravity and bending strength after curing were determined.

In order to see the strength developability per specific gravity, the specific strength (bending strength/specific gravity) was calculated.

Further, in oder to know the fluidity of the material (composition), the state of filling of the composition to the corners of the molded plate was visually observed, and in order to see the durability of glass fibers, the 4-week cured moldings were immersed in water of 80°C for 3 days and their bending strength was measured.

The test results are shown collectively in Table 1.

As seen from Table 1, a glass fiber-reinforced cement molded plate having a small density but a sufficiently high strength, which is desired by this invention, can be obtained by adding the "shirasu" balloons of this invention to the cement mixture, the effect of addition of such "shirasu" balloons being clearly noted from the comparison of specific strength between Example 1 and Comparative Example 3. Also, as noted from the comparison between Examples 1–4 and Comparative Example 2, a synergistic effect is produced by the addition of both fumed silica and said "shirasu" balloons, from which it is seen that, by adding said both fumed silica and "shirasu" balloons to the cement mixture, it is possible to obtain a lightweight and high-strength glass fiber-reinforced cement molded product, the product of this invention.

As described above, the cement composition containing "shirasu" balloons of this invention added thereto can minimize the damage to the reinforcing fibers by the aggregates such as siliceous sand in the course of pressing operation, and in case of further adding fumed silica to the composition, a synergistic effect of said both "shirasu" balloons and fumed silica is produced to make it possible to obtain an even more excellent glass fiber-reinforced cement press molded product.

EP 0 222 339 B1

## Table 1

| Composition | | Example 1 | Comparative Example 4 | Example 2 | Example 3 | Example 4 | Comparative Example 5 | Comparative Example 6 | Comparative Example 1 | 2 | 3 |
|---|---|---|---|---|---|---|---|---|---|---|---|
| | Portland cement (part by wt.) | 100 | 100 | 100 | 100 | 100 | 100 | 100 | 100 | 100 | 100 |
| | Siliceous sand #5 (part by wt.) | 25 | 25 | 25 | 25 | 25 | 25 | 25 | 25 | 25 | 25 |
| | Siliceous sand #6 (part by wt.) | 50 | 50 | 50 | 50 | 20 | 50 | 50 | 50 | 50 | 50 |
| | Siliceous sand #7 (part by wt.) | 35 | 50 | 35 | 65 | 5 | 55 | 15 | 15 | 60 | 75 |
| | "shirasu" balloon (part by wt.) | 25 | 25 | 25 | 5 | 45 | 5 | 45 | — | — | — |
| | Fumed silica (part by wt.) | 15 | — | 15 | 5 | 40 | — | — | — | 15 | — |
| | Glass fiber (vol% *) | 3 | 3 | 3 | 3 | 3 | 3 | 3 | 3 | 3 | 3 |
| | Glass fiber sheeting | — | — | One layer | — | — | — | — | One layer | — | — |
| | Water | 82 | 78 | 82 | 75 | 90 | 78 | 78 | 82 | 76 | 56 |
| Fluidity of material | | Good | Rather bad | Good | Good | Good | Good | Good | Rather bad | Good | Bad |
| Specific gravity | | 1.75 | 1.73 | 1.75 | 1.95 | 1.60 | 1.96 | 1.55 | 1.65 | 2.03 | 2.01 |
| Bending strength after 4-week curing (kg/cm²)* | | 150 | 130 | 170 | 142 | 128 | 137 | 116 | 104 | 110 | 130 |
| Specific strength (kg/cm²)* | | 86 | 75 | 97 | 73 | 80 | 70 | 75 | 63 | 69 | 65 |
| Bending strength after 3-day in water of 80°C (kg/cm²)* | | 120 | 85 | 136 | 99 | 115 | 82 | 70 | 62 | 112 | 78 |
| Bending strength retention after 3-day immersion in water of 80°C (%) | | 80 | 65 | 80 | 70 | 90 | 60 | 60 | 60 | 80 | 60 |

* 1 kg/cm² = 0.1 MPa
Note) * Based on the volume of the molded body.

## Claims

1. A glass fiber-reinforced cement press molded body containing "shirasu" balloons in an amount of 5 to 45% by weight and ultra-fine particulate activated silica in an amount of 5 to 40% by weight, both based on the weight of the cement, and containing glass fibers in an amount of 1 to 7% by volume based on the volume of the molded body.

2. A glass fiber-reinforced cement press molded body according to claim 1, wherein the glass fibers are alkali-resistant glass fibers.

3. A glass fiber-reinforced cement press molded body according to claim 1, wherein the glass fibers are short fibers or chopped strand.

4. A glass fiber-reinforced cement press molded body according to claim 1, wherein the length of glass fibers is 3 to 50 mm.

5. A glass fiber-reinforced cement press molded body according to claim 1, wherein the length of glass fibers is 6 to 25 mm.

6. A glass fiber-reinforced cement press molded body according to claim 1, wherein the cement is Portland cement, GRC cement, moderate heat cement, blast furnace cement, fly-ash cement, alumina cement, silica cement or thermosetting cement.

7. A glass fiber-reinforced cement press molded body according to claim 1, wherein a sheeting or netting is contained in the molded body.

8. A glass fiber-reinforced cement press molded body according to claim 7, wherein the material of the sheeting or netting is glass fibers, synthetic fibers such as polyvinyl alcohol fibers, polyethylene fibers, polypropylene fibers, acrylonitrile fibers, polyamide fibers or polyethylene terephthalate fibers; or a metal such as stainless steel or iron.

9. A glass fiber-reinforced cement press molded body according to claim 7, wherein the mesh size of the sheeting or netting is 5 to 40 mm.

10. A glass fiber-reinforced cement press molded body according to claim 7, wherein the mesh size of the sheeting or netting is 15 to 25 mm.

11. A glass fiber-reinforced cement press molded body according to claim 1, wherein the ultra-fine particulate activated silica is fumed silica.

12. A process for producing a glass fiber-reinforced cement press molded body claimed in claim 1, which process comprises adding to cement "shirasu" balloons in an amount of 5 to 45% by weight and ultra-fine particulate activated silica in an amount of 5 to 40% by weight, both based on the weight of the cement, mixing them with water, further adding thereto alkali-resistant glass fibers in an amount of 1 to 7% by volume based on the volume of the molded body, conducting the mixing operation, and then press molding the mixture under a pressure of 5 MPa (50 kg/cm²) or below.

## Patentansprüche

1. Preßgeformter Körper aus glasfaserverstärktem Zement, der "Shirasu"-Ballons in einer Menge von 5 bis 45 Gew.% und ultrafeines, partikelförmiges, aktiviertes Siliziumdioxid in einer Menge von 5 bis 40 Gew.%, jeweils in bezug auf das Gewicht des Zementes, und Glasfasern in einer Menge von 1 bis 7 Vol.% in bezug auf das Volumen des geformten Körpers enthält.

2. Preßgeformter Körper aus glasfaserverstärktem Zement nach Anspruch 1, wobei die Glasfasern alkaliwiderstandsfähige Glasfasern sind.

3. Preßgeformter Körper aus glasfaserverstärktem Zement nach Anspruch 1, wobei die Glasfasern kurze Fasern oder geschnittene Spinnfäden sind.

4. Preßgeformter Körper aus glasfaserverstärktem Zement nach Anspruch 1, wobei die Länge der Glasfasern 3 bis 50 mm beträgt.

5. Preßgeformter Körper aus glasfaserverstärktem Zement nach Anspruch 1, wobei die Länge der Glasfasern 6 bis 25 mm beträgt.

6. Preßgeformter Körper aus glasfaserverstärktem Zement nach Anspruch 1, wobei der Zement Portlandzement, "GRC"-Zement, mäßig erhitzbarer Zement, Hochofenzement, Flugaschezement, Aluminiumoxidzement, Siliziumdioxidzement oder hitzeaushärtbarer Zement ist.

7. Preßgeformter Körper aus glasfaserverstärktem Zement nach Anspruch 1, wobei eine Einlage oder ein Geflecht in dem Formkörper enthalten ist.

8. Preßgeformter Körper aus glasfaserverstärktem Zement nach Anspruch 7, wobei das Material der Einlage oder des Geflechtes aus Glasfasern, synthetischen Fasern, wie Polyvinylalkoholfasern, Polyethylenfasern, Polypropylenfasern, Acrylnitrilfasern, Polyamidfasern oder Polyethylenterephthalatfasern, oder einem Metall, wie rostfreier Stahl oder Eisen, besteht.

9. Preßgeformter Körper aus glasfaserverstärktem Zement nach Anspruch 7, wobei die Maschenweite der Einlage oder des Geflechtes 5 bis 40 mm beträgt.

10. Preßgeformter Körper aus glasfaserverstärktem Zement nach Anspruch 7, wobei die Maschenweite der Einlage oder des Geflechtes 15 bis 25 mm beträgt.

11. Preßgeformter Körper aus glasfaserverstärktem Zement nach Anspruch 1, wobei das ultrafeine, partikelförmige, aktivierte Siliziumdioxid Rauchsiliziumdioxid ist.

6

12. Verfahren zur Herstellung eines preßgeformten Körpers aus glasfaserverstärktem Zement gemäß Anspruch 1, wobei das Verfahren die Zugabe von "Shirasu"-Ballons in einer Menge von 5 bis 45 Gew.% und von ultrafeinem, partikelförmigen, aktivierten Siliziumdioxid in einer Menge von 5 bis 40 Gew.%, jeweils in bezug auf das Gewicht des Zementes, zu dem Zement, das Vermischen mit Wasser, weiterhin die Zugabe von alkaliwiderstandsfähigen Glasfasern in einer Menge von 1 bis 7 Vol.% in bezug auf das Volumen des Formkörpers, das Vermengen und anschließend das Preßformen der Mischung unter einem Druck von 5 MPa (50 kg/cm²) oder darunter umfaßt.

## Revendications

1. Corps en ciment moulé à la presse renforcé par des fibres de verre, contenant des billes de "shirasu" en une quantité de 5 à 45 % en poids et de la silice activée particulaire ultrafine en une quantité de 5 à 40 % en poids, chacune étant exprimée par rapport au poids du ciment, et contenant des fibres de verre en une quantité de 1 à 7 % en volume par rapport au volume du corps moulé.

2. Corps en ciment moulé à la presse renforcé par des fibres de verre selon la revendication 1, dans lequel les fibres de verre sont des fibres de verre résistant aux substances alcalines.

3. Corps en ciment moulé à la presse en ciment renforcé par des fibres de verre selon la revendication 1, dans lequel les fibres de verre sont des fibres courtes ou des brins hachés.

4. Corps en ciment moulé à la presse renforcé par des fibres de verre selon la revendication 1, dans lequel la longueur des fibres de verre est de 3 à 50 mm.

5. Corps en ciment moulé à la presse renforcé par des fibres de verre selon la revendication 1, dans lequel la longueur des fibres de verre est de 6 à 25 mm.

6. Corps en ciment moulé à la presse renforcé par des fibres de verre selon la revendication 1, dans lequel le ciment est du ciment Portland, du ciment GRC, du ciment pour chaleur modérée, du ciment de haut fourneau, du ciment de cendres volantes, du ciment alumineux, du ciment siliceux ou du ciment thermodurcissable.

7. Corps en ciment moulé à la presse renforcé par des fibres de verre selon la revendication 1, dans lequel une armature ou treillis est contenu dans le corps moulé.

8. Corps en ciment moulé à la presse renforcé par des fibres de verre selon la revendication 7, dans lequel le matériau de l'armature ou treillis consiste en des fibres de verre, des fibres synthétiques telles que des fibres d'alcool polyvinyliques, des fibres de polyéthylène, des fibres de polypropylène, des fibres d'acrylonitrile, des fibres de polyamide ou des fibres de téréphtalate de polyéthylène ; ou un métal tel que l'acier inoxydable ou le fer.

9. Corps en ciment moulé à la presse renforcé par des fibres de verre selon la revendication 7, dans lequel la dimension des mailles de l'armature ou treillis est de 5 à 40 mm.

10. Corps en ciment moulé à la presse renforcé par des fibres de verre selon la revendication 7, dans lequel la dimension des mailles de l'armature ou treillis est de 15 à 25 mm.

11. Corps en ciment moulé à la presse renforcé par des fibres de verre selon la revendication 1, dans lequel la silice activée particulaire ultrafine est de la silice de fumée.

12. Procédé de production d'un corps en ciment moulé à la presse renforcé par des fibres de verre selon la revendication 1, lequel procédé consiste à ajouter à du ciment des billes de "shirazu" en une quantité de 5 à 45 % en poids et de la silice activée particulaire ultrafine en une quantité de 5 à 40 % en poids, chacune étant exprimée par rapport au poids du ciment, à les mélanger avec de l'eau, à y ajouter encore des fibres de verre résistant aux substances alcalines en une quantité de 1 à 7 % en volume par rapport au volume du corps moulé, à effectuer l'opération de mélange, puis à mouler le mélange à la presse sous une pression de 5 MPa (50 kg/cm²) ou inférieure.